# EUROPEAN PATENT SPECIFICATION

(11) **EP 3 192 371 B1**
(45) Date of publication and mention of the grant of the patent: **27.02.2019**
(21) Application number: 17150031.7
(22) Date of filing: 02.01.2017
(51) Int. Cl.: C02F 1/78, A01N 59/00

(54) **METHOD FOR DISINFECTION OF AGRICULTURAL SOIL**
VERFAHREN ZUR DESINFEKTION VON LANDWIRTSCHAFTLICHEM BODEN
PROCÉDÉ DE DÉSINFECTION DES SOLS AGRICOLES

(30) Priority: 18.01.2016 ES 201630043
(43) Date of publication of application: 19.07.2017
(73) Proprietor: AGROZONO, S.L., 46184 San Antonio de Benageber Valencia (ES)
(72) Inventor: VILLANUEVA DECODES, Emilio Jesús, 46940 Manises (Valencia) (ES)
(74) Representative: Ungria López, Javier

(56) References cited:
- EP-A1- 1 671 528
- JP-A- H1 030 091
- JP-A- 2002 020 211
- JP-A- 2005 060 296
- US-A1- 2003 150 933
- KAZUHIRO FUJIWARA ET AL: "Effects of Ozonated Water Application on the Population Density of Fusarium oxysporum f. sp. lycopersici in Soil Columns", OZONE: SCIENCE AND ENGINEERING., vol. 28, no. 2, 1 May 2006 (2006-05-01), pages 125-127, XP055356541, US ISSN: 0191-9512, DOI: 10.1080/01919510600559435

## Description

### TECHNICAL FIELD

The present patent application describes a method for the disinfection of soil and other substrates for agricultural crop through the use of ozone, more specifically the use of ozonated water prepared at the time and place of its application.

### BACKGROUND

Climate change, the increase in population and the imminent shortage of natural resources make it necessary to change the traditional agricultural production models and replace them with more sustainable production systems.

Moreover, since 1840 it has been known that ozone is the most potent oxidant that exists. In addition to this, its effectiveness as a germicidal and bactericidal agent has been demonstrated in several studies. In agriculture, it has been demonstrated that ozone provides additional benefits both for the crop and for the farmer, such as: greater growth for plants, less time for fruit to ripen, greater production and better flavor, as well as less risk of diseases.

Methyl bromide is a very efficient and well-known compound which was permitted until recently. Since it was prohibited, other registered chemical products are being used, such as Chloropicrin, 1-3 Dichloropropene or a mixture of the two (Agrocelhone), Metam-sodium, Metam-potassium, Methyl isothiocyanate. However, these products must be handled by certified personnel according to Royal Decree 1311/2012 and are hazardous to people, the environment, and in particular, to surface water and ground water. Additionally, the safety period for planting is more than a month, during which the soil is left unproductive.

Furthermore, the methods for disinfection used in agriculture up to the present use chemical additives that create waste. This is not the case if ozone is used to disinfect soil or substrates for agricultural purposes and, therefore, it is not necessary to establish a waiting period before crops may be grown.

However, the instability of ozone in the medium makes it impossible to store, and its production must be on demand and take place at the application site, requiring a large amount of energy, which, in turn, is a serious drawback. For this reason, there are no methods to date that can provide an efficient disinfection of soil using ozone.

The artificial production of ozone is generally done by the activation of oxygen from the air through electric discharges at high voltages. This electric energy breaks down the oxygen molecule, restructuring its atoms to form OZONE. This is done in the same way as in nature during storms.

The release of energy upon the production of ozone is an endothermic process, the energy of which comes from the electric discharge. In the same way, ozone spontaneously decomposes into diatomic oxygen through the release of excess energy, which is why it must be produced at the time and place of its immediate use. To do so, devices known as "ozonators" or ozone generators are used.

Since the end of the 19th century the disinfectant and antiseptic properties of ozone have been studied, and since then it has been used very effectively in environmental treatments. Its ability to break down molecules with double bonds and aromatic rings through a mechanism known as ozonolysis makes ozone suitable for many applications, such as a bactericide, virucide, fungicide and deodorant; swiftly destroying streptococci, staphylococcus, coliform bacteria, etc., as well as the most potent diphtheria and tetanus toxins.

Ozone is generally used to carry out one or more of the fundamental functions of microbicidal, deodorant and oxygenating actions. Of these actions, the microbicidal activity is perhaps the most important characteristic of ozone. Due to its oxidant properties, ozone can be considered one of the fastest and most effective microbicidal agents known. The action of ozone has a broad spectrum that encompasses the elimination of bacteria, fungi, viruses and nematodes.

Additionally, ozone is also used for its deodorant properties and is of great use in all types of public buildings and in the treatment of certain odors from an industrial source, human odors, humidity, tobacco, food, etc. On the one hand, ozone oxidizes organic matter (ozonolysis) and, on the other hand, it attacks microbes that feed off such organic matter. There is a wide range of odors that can be attacked by ozone.

In large cities, where there are many closed buildings that are poorly ventilated, it is common for the air to be rarefied as a result of a lack of oxygen, which we often identify as stale air. Due to its greater oxygenating potential, ozone contributes to improving the efficiency of superior organism cells as to their ability to exploit available oxygen through the stimulation of various enzymes that intervene in these processes. Moreover, the decomposition of ozone necessarily produces oxygen, which will be located where the ozone gas has penetrated in the air, water or underground.

As was previously mentioned, the action of disinfecting by ozone takes place through oxidation. More specifically, the action of disinfecting by ozone takes place by molecular oxidation in conditions with a low pH, and it takes places by oxidation through hydroxyls in conditions with a medium to high pH. Due to these oxidant properties, ozone is considered one of the fastest and most effective microbicidal agents known.

As an alternative method to using ozone, methods of disinfection based on the use of chlorine are also known in the state of the art. In these types of processes, the disinfecting action is produced when chlorine extends throughout the cell walls and oxidizes the enzyme and, therefore, these methods for disinfection are slow. However, methods for disinfection based on ozone are advantageous since in these methods the cell membranes are destroyed or decomposed in a very fast process where, as an additional advantage, the ozone becomes inactive, transforming itself into oxygen. More specifically, ozone acts on the cell wall of the microorganism, decomposing it, which creates a "hole" through which its cellular fluid is lost. Disinfection using ozone is called bacteriolysis.

Additionally, treatments based on ozone require a residual dose of the disinfectant and an application period that is significantly smaller than in methods of disinfection based on chemical additives, such as chlorine. Therefore, generally a dose of residual ozone of 0.1 mg/l for 5 seconds is needed, compared to 4 hours necessary for chlorine. It has also been determined that ppm of ozone are needed for four minutes to eliminate microorganisms. Ozone can also kill 99% of 60,000 coliform/ml in contaminated water in 2.8 seconds with one dose of ppm; the same dose of chlorine would need 15,000 seconds.

Another significant advantage of using ozone in the elimination of microorganisms is that there is no resistance produced, since their mechanism of action is based on the rupture of the cell wall. Generally, aerobic spore-forming bacteria are disinfected more easily than anaerobic spore-forming bacteria. The effectiveness of the disinfection in solution is higher for lactic acid bacteria and, therefore, also for yeast.

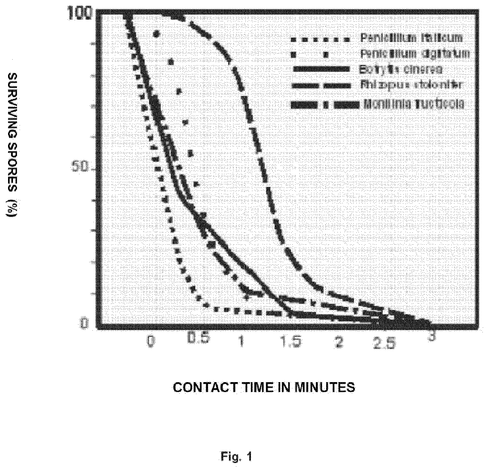

In figure 1 we see the period of time required for the pathogen to be in contact with ozone, either in the air or mixed with water, in order for it to be destroyed.

As was previously mentioned, the disinfectant properties of ozone are widely known.

Kazuhiro Fujiwara et al. deal with the effect of ozonated water on the population of Fusarium oxysporum (science and engineering, vol. 28, no.2, pg. 125-127, 1.May, 2006).

EP1 671 528 refers to the treatment of the soil with ozone. Methods for disinfecting air or water using this compound are also known. However, although water disinfected with ozone has been used as irrigation water sometimes, up to the present there is no known effective method for disinfecting soil and other substrates for agricultural crop using ozone as a disinfectant.

### DESCRIPTION

In a first aspect, the present patent application refers to a method for disinfecting soil or other substrates for agricultural crop, characterized in that it comprises:
- obtaining a soil or another substrate for agricultural crop in its field capacity;
- treating the soil or substrate in its field capacity from the previous stage with ozonated water containing a minimum of 2 ppm of ozone, preferably between 5 and 6 ppm of ozone, wherein the ozonated water is prepared in situ with an ozone-producing apparatus connected to the supply of water with a pH between 5.0 and 8.5, preferably the treatment with ozone is applied for a period from 1 h 30 min to 2 hours; and
- allowing a time period to pass from 30 min to 24 hours after treatment with ozone; and
- inoculating the disinfected soil or agricultural substrate with at least one species of beneficial microorganisms.

The use of ozone in the disinfection of soil implies several technical problems that have not been solved to date. More specifically, an effective system for producing the quantity of ozone necessary for the treatment of soil in an economically viable way was not known. Furthermore, taking into account that the lifetime of ozone is just a few minutes, it is necessary that the production of ozone can be done in a mobile way, meaning that ozone can be produced at the application site and during the treatment. With regard to the above-mentioned, in order to achieve greater effectiveness of disinfection, it is preferable that the ozone-producing apparatus be small, and easily able to access the irrigation heads.

In the method for the disinfection of soil or other substrates for agricultural crop that is described in this patent application, the ozone in a gaseous state mixes thoroughly with irrigation water until saturating the water with ozone gas, thereby allowing the effective transport thereof to the deepest layers of the soil. Preferably, the mixture of water and ozone takes place with ozone gas in the form of nanobubbles. Thus, in the method of the present invention, a much greater mobility of ozone is achieved in the substrate than if ozone gas were directly injected, and therefore its implementation is much less complicated and costly.

In the present invention, the term "other substrates for agricultural crop " is understood as substrates used in hydroponic agriculture, meaning crops where the roots grow in an artificial medium made up of different permeable materials with capacity to retain moisture and nutrients.

The ozone-producing apparatus used in the method for disinfection that is described in the present invention can be transported to the treatment site and, furthermore, allows for the modification of parameters such as:
- the concentration of ozone produced, based on the oxygen load,
- the production of ozone in weight, based on the current intensity used,
- the time it takes for the application of the ozonation treatment,
- the percentage of water/ozone mixture and the size of the gas bubbles in the mixture,
- the pressure and the flow rate of the irrigation water when exiting the apparatus.

This versatility allows each treatment to be adapted to the specific conditions of the soil or substrate that is to be treated, specifically, the soil structure and the type and degree of the infection that is to be treated, as well as allowing the conditions of the treatment to be adapted to the quality of the irrigation water that will be used.

In preferred embodiments of the method of the present invention, the ozone-producing apparatus comprises two main parts, so that ozone is produced from oxygen in one part of the ozone-producing apparatus, and, in the other part, ozone is injected into the irrigation water network, later passing into a mixing tank.

In the method for disinfecting soil and substrates for agricultural crop described in this patent application, the use of the ozonizing apparatus AGR-60, with a flow rate of 3000 L/h, or AGRZ-800, with a flow rate between 10,000-45,000 L/h and able to treat a cultivation area of 1 Ha, is especially advantageous.

An additional problem related to the use of ozone to disinfect soil or substrates for agricultural use is the low solubility of ozone in water, and even though this solubility is greater than the solubility of oxygen, it is still complicated, such as with any gas mixed with a liquid.

To solve this technical problem and achieve a saturation of the irrigation water with ozone gas, the method of the present invention for disinfecting soil or other agricultural substrates comprises the use of a mixing tank, where the size of the bubbles created by injecting the gas into irrigation water is reduced to achieve the so-called nanobubbles. In this way, the amount of ozone gas that each liter of water contains is much greater than the amount which has been achieved to date, allowing the use of a smaller number of ozone generator reactors, as well as lower electricity consumption and a reduction in the size of the apparatus necessary to apply the treatment, allowing for the mobility of the mentioned apparatus.

To obtain ozone nanobubbles, it is necessary to achieve a recirculation of water mixed with ozone through ceramic sieves, with a pressure between 1 and 6 atm, depending on the flow rate of the irrigation water. For example, for a flow rate of 40,000 I, a pressure of 3 atm would be needed in the mixer. This pressure and flow rate can be automatically regulated by an automatic pilot valve.

The use of ozone in low concentrations, specifically between 0.4 and lower than 2 ppm, makes it possible to disinfect the water used for treatment, given that ozone does not only act as a deodorizer and oxidant for dissolved organic substance, but also as a disinfectant.

As above-mentioned, ozone is an oxidizing and germicidal agent. As a result, it can be used to oxidize organic matter present in water, causing the treated water to have a smell and color. Ozone is increasingly being used as an oxidizing agent due to its effectiveness, its REDOX potential is 2.07 eV. Thanks to its oxidizing potential, ozone has the advantage of reducing the time that is normally required for disinfection.

The use of this type of ozonated water supplies crops with quality water which is pathogen free, but lacking in ability to disinfect soil, since the low ozone load quickly becomes inactive when coming into contact with the organic matter present in the soil. Thus, the use of water with low concentrations of ozone (lower than 2 ppm), either for drip irrigation, so as for mist or micro-spray irrigation, provides water that is pathogen free, which allows plants to grow in a more favorable and antiseptic medium for farming. However, these conditions last for a very short time period and, therefore, this system requires that irrigation takes place almost continuously, thus preventing the colonization of beneficial microorganisms.

However, the method described in this patent application allows the disinfection of a soil or another substrate for agricultural crop through treatment with water that contains a significantly high amount of dissolved ozone, more specifically containing an amount that is equal to or greater than 2 ppm. Thus, through single applications of the treatment, the method of the present invention makes it possible to not only disinfect irrigation water, but to also disinfect the conduits used and the soil or substrate for agricultural crop being treated, since this method allows the ozonated water to reach the soil and penetrate deeply, maintaining its ozone load and, therefore, its disinfectant power.

The soil or substrate to be treated must be in its field capacity before carrying out the treatment with ozone. Therefore, if necessary, water should be previously applied to the soil or substrate until it reaches its field capacity, a water amount which will depend on the soil structure and its characteristics, being, for example, arenaceous, argillaceous, etc.; depending on the existing crops or those which will be planted; and depending on the irrigation system used and on the irrigation habits of the farmer.

Ozone in a gaseous state has practically zero mobility in soil, regardless of whether the soil is compact or aerated. Once the ozone is mixed with the irrigation water, it easily spreads throughout the soil in its field capacity, quickly reaching ends of the irrigation bulb in the case of emitters, or the deepest layers in the case of sprinklers.

The lifetime of ozone at a water temperature of 15°C is 30 minutes, and at 25°C it is 15 minutes. Therefore, we must achieve that the ozone produced travels through the pipes, reaches the emitter and spreads throughout the field until reaching the outer edges of the irrigation bulb before it degrades and becomes transformed into oxygen. The inventors have observed that when applying the method of the present invention, the time needed for the ozonated water to drain in a hydroponic cultivation is less than its lifetime.

In preferred embodiments of the present invention, the ozone treatment takes place during a time period of from 1 h 30 min to 2 hours, thereby guaranteeing that the water with a disinfectant load will reach the limits of the irrigation bulb, thereby obtaining the disinfection of the existing microorganisms.

Considering that disinfection with ozone does not create resistance due to its mode of action, the method of the present invention makes it possible to achieve a total disinfection of the treated soil or substrate. Once the ozone treatment is finished, the method comprises the inoculation of at least one species of beneficial microorganisms to colonize the empty space and impede the access of opportunistic pathogens. Preferably, these beneficial microorganisms are selected from the group that consists of *Trichoderma, Bacillus, Azotobacter, Pseudomonas* and any combination of the aforementioned.

Inoculation with beneficial microorganisms takes place in a time period ranging from 30 minutes to 24 hours after the ozone treatment is finished. The minimum period of 30 minutes allows for the degradation of residual ozone into the oxygen before inoculation. Furthermore, the application of these microorganisms before 24 hours makes it possible to avoid the treated area from being exposed to a rapid appearance of opportunistic pathogens that can become more aggressive and harmful than before disinfection, due to the fact that there will be no beneficial microorganisms to neutralize their effects.

The application of water in different stages of the method described in this patent application can be done through any procedure known by a person skilled in the art, preferably through localized irrigation or sprinkling. More specifically, it is preferred that the ozonated water be supplied to the soil through drip irrigation, since this procedure provides a more effective disinfecting action, eliminating bacteria, fungi, viruses and nematodes initially present in the soil or substrate to be treated. Preferably, the beneficial microorganisms are applied in the disinfected bulb.

In other preferred embodiments, inoculation with microorganisms takes place by means of an injector placed in the ozonating apparatus.

The effectiveness of the disinfection of the pathogen is influenced by the contact period of time, the ozone concentration, the temperature of the water used as a means of mobility, the pH and the dissolved organic and inorganic substances. We can affirm that the power of the disinfection increases with a low pH (preferably between 5.0 and 7.0, an optimal pH being between 5.6 and 6.5) and with a low water temperature. The lower the temperature the better the dissolution of the gas in the water, preferably at an interval between 8°C and 25°C, and more preferably between 10 °C and 20°C, the optimal temperature being 15°C.

In other preferred embodiments, the water used in the method described in this patent application, specifically the irrigation water used in the ozonation stage, has no additives, such as mineral fertilizers or organic matter. In the method of the present invention, the treatment with ozonated water is more effective when the levels of organic matter in the pipes are low (preferably, REDOX values for the water should be between 600 mV and 1100 mV), the temperatures of the soil and the water are also low (preferably between 10 and 20 °C) and the pH is preferably between 5.0 and 7.0.

In other preferred embodiments, the method for disinfecting soil and other substrates for agricultural crop is done as a single event, and may be carried out before or during the crop. It is also possible to perform repeated treatments of ozone, since this treatment does not create harmful waste for the crops.

Therefore, the use of ozone as a disinfectant in the method for disinfecting soil and other types of substrates for agricultural crop of the present invention has several important advantages. On the one hand, thanks to its oxidizing properties, ozone is considered one of the fastest and most effective microbicidal agents known. Additionally, the use of ozone does not contaminate the soil or the substrate treated, and furthermore it does not leave harmful waste. Rather, since its degradation product is oxygen, the use of ozone favors the development of roots and plant growth.

However, ozone generally degrades very quickly, which makes treatments based on this compound enormously difficult. For example, in conditions of water without organic matter, a pH of 7 and a water temperature of 15°C, the ozone degradation in oxygen is produced approximately 30 minutes after ozone is generated. Therefore, it is especially advantageous that the method of the present invention allows for the production of the necessary amount of ozone at the time and place that the disinfecting action is needed.

The method described in this patent application can be applied to soil or other substrates without crops growing. In these cases, the method preferably comprises the following stages:
- preparing the soil or substrate for the planting;
- obtaining the soil or substrate in its field capacity;
- treating the soil or substrate in its field capacity from the previous stage with ozonated water containing a minimum of 2 ppm of ozone, wherein the ozonated water is prepared in situ with an ozone-producing apparatus connected to the supply of water with a pH between 5.0 and 8.5;
- allowing a time period to pass from 30 min to 24 hours after the treatment with ozone;
- inoculating the disinfected soil or agricultural substrate with at least one species of beneficial microorganisms; and
- planting the crops to be grown.

The stage of preparing the soil or substrate for planting may comprise the processes of decompaction and the formation of ridges or plateaus, the installation of the irrigation network and, if necessary, installation of padding.

Preferably, the treatment with ozonated water comprised in the method for the disinfection of soils or other substrates for agricultural crop that is described in this patent application comprises the application, by means of an irrigation network in the disinfected bulb area, of beneficial microorganisms that colonize again the soil for farming and impede the recolonization of pathogens.

Planting may be done through usual systems, including the placement of tunnels or pads which will be necessary for the normal development of the crops.

The method of the present invention has been demonstrated to be effective for disinfecting soil from phytopathogenic fungi such as, for example *Sclerotinia sp, Fusarium oxysporum* and *Phytophthora citrophthora.* More specifically, in tests performed, the results showed a disinfection of 100% against the aforementioned phytopathogenic fungi.

Additionally, this disinfection method is also effective for pathogenic mesophilic bacterial populations, such as *Erwinia amylovora* and *Clavibacter michiganensis.* Results from tests performed on these bacteria showed a mortality of less than 50 % after the first application of ozonated water. Subsequently, after a second application, a reduction of at least 50 % was maintained.

As a result of the reduction in the populations of microorganisms that is achieved through the method of disinfection of the present invention, an increase in plant development is achieved for plants grown in said soil or substrate.

Thus, the method of the present invention enables the use of ozone as a disinfectant for soil or substrate, since it effectively allows the necessary amount of ozone to be produced at the place and time it is required. Hence, this method provides a viable alternative for the disinfection of agricultural soil as a step prior to planting crops, avoiding the use of phytosanitary products, contamination and the accumulation of waste in soils and plants. This is due to the fact that ozone has a high oxidizing potential, eliminating microorganisms, given that the release of large amounts of oxygen radicals eliminates microbiota from the soil.

Alternatively, the method described in this patent application can be applied to soil or other substrates where crops are being grown, including both vegetables and fruit. In these cases, the method preferably comprises the following stages:
- obtaining the soil or substrate in its field capacity;
- treating the soil or substrate from the previous stage with ozonated water containing a minimum of 2 ppm of ozone, wherein the ozonated water is prepared in situ with an ozone-producing apparatus connected to the supply of water with a pH between 5.0 and 8.5,
- allowing a time period to pass from 30 min to 24 hours after treatment with ozone;
- inoculating the disinfected soil or agricultural substrate with at least one species of beneficial microorganisms.

The method described in this patent application allows for the instantaneous disinfection of soil or other substrates for agricultural crop without producing harmful waste, since the only byproduct of the ozone degradation in the soil is oxygen, which is highly beneficial for the development of roots and beneficial microorganisms.

In the use of both chemical disinfectants and solarization techniques, the necessary waiting period in order for the disinfection to be effective is from 20 to 60 days. Advantageously, the method of disinfection of the present invention allows for the disinfection of soil in which crops are planted, meaning it allows for the application of ozone to the soil or substrate infected with pathogens while crops are being grown without leaving any type of toxic waste, as shown by the analysis of the harvested product. The inoculation of beneficial microorganisms for a time period of 30 minutes to 24 hours will regenerate the affected root system.

Another advantage is that, in the case of a serious infection of pathogens during farming, the method of the present invention can be performed several times, since it does not generate waste or negatively affect the plants. Furthermore, it is also possible to carry out several ozone treatments (various applications of ozone) before proceeding with the inoculation with beneficial microorganisms.

Additionally, the method for disinfection that is described in this patent application is highly versatile, since it can be applied before and after planting, after a chemical disinfection through another known method or without having performed any prior disinfection.

### BRIEF DESCRIPTION OF THE DRAWINGS

Figure 1: A diagram showing the effect of ozonated water on several fungi, such as *Penicillium Italicum, Penicillium digitatum, Botrytis cinerea, Rhizopus stolonifer* and *Monilinia fructicola.*
Figure 2a: A picture showing the containers with the substrate used in example 1.
Figure 2b: A picture showing the system used in example 1 for disinfecting a substrate according to the method of the present invention.
Figure 3a: A graph showing the survival of phytopathogenic fungi after the 1st application of example 1. The amounts of fungi present in the substrate at time zero (t=0), and 24 hours after the application (t=1), at depths of 20 cm, 40 cm and 60 cm, are analyzed.
Figure 3b: A graph showing the survival of phytopathogenic bacteria after the 1st application of example 1. The amounts of bacteria present in the substrate at time zero (t=0), and 24 hours after the application (t=1), at depths of 20 cm, 40 cm and 60 cm, are analyzed.
Figure 4a: A graph showing the survival of phytopathogenic fungi after the 2nd application of example 1. The amounts of fungi present in the substrate at time zero (t=0), 1 day (t=1) and 30 days (t=30) after the application, at depths of 20 cm, 40 cm and 60 cm, are analyzed.
Figure 4b: A graph showing the survival of phytopathogenic bacteria after the 2nd application of the example 1. The amounts of fungi present in the substrate at time zero (t=0), 1 day (t=1) and 30 days (t=30) after the application, at depths of 20 cm, 40 cm and 60 cm, are analyzed.
Figure 5: A picture showing the state of tomato plants after the first application of example 1: Fig. 5a: control; Fig. 5b: treatment with ozone.
Figure 6: A picture showing the state of tomato plants after the second application of example 1: Fig. 6a: control; Fig. 6b: treatment with ozone.
Figure 7: Sampling points gathered in example 3

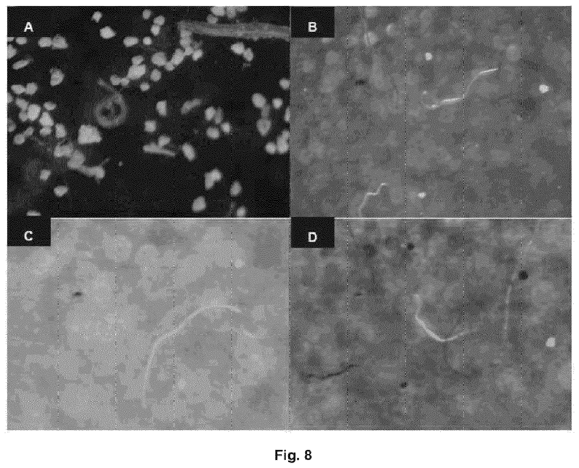

Figure 8: Images shown: (A) soil sample under a lens; (B), (C) and (D) detailed views of nematodes.
Figure 9: A graph showing the evolution of the population of nematodes in soil after treatment with ozone and after the inoculation of microorganisms obtained in example 5.

### Examples

### Example 1: Effectiveness of ozone treatment in the disinfection of soil without crops

The general aim of the study was to evaluate the effectiveness of the use of ozone as a strategy for the disinfection of soil. Specifically, the goal was to study the effect of the method of disinfection on tomato plants and relate the oxidative potential of ozone to the elimination of pathogens at different depths.

To achieve the aforementioned objectives, soil without crops was infected with the phytopathogen species *Sclerotinia, Fusarium, Erwinia, Phytophthora* and *Clavibacter.* The test was done in Lorca (Murcia). It took place outdoors in pots of soil with no crops and where tomatoes, peppers and melons had previously been grown. After the first application of the method of the present invention, tomato plants, *Lycopersicum esulentum,* were transplanted and the response of the plant to the treatments was evaluated.

The treatments tested were: T0 (control) and T1 (ozone). After the application of the method two consecutive times, inoculation was done with the following beneficial microorganisms (mixture named "microorganism formula (1)"): *Trichoderma* (4x10⁸ CFU), *Bacillus* (1.5x10⁸ CFU), *Azotobacter* (1.5x1 0⁸ CFU) and *Pseudomonas* (1.5x10⁸ CFU).

The microbiological content of the soil was evaluated at different depths: 20, 40 and 60 cm, before and after the applications.

### 1.1 Testing protocol

Containers of a known volume of 1000 I (1x1x1m) were installed in the field. Moreover, substrate from a greenhouse, in which melons, peppers and tomatoes were previously grown was selected and homogenized. Subsequently, the containers were filled with that substrate.

In the laboratory, the following species were grown *in vitro:*
- Phytopathogen bacteria: *Erwinia amylovora* and *Clavibacter michiganensis*
- Phytopathogen fungi: *Sclerotinia sp, Fusarium oxysporium* and *Phytophthora citrophthora*

Each microorganism was cultivated in a liquid medium until reaching a concentration of 10⁸ cfu/ml. For each one of the pots, a 1 liter microbial solution was prepared.

Then, the pathogenic microorganisms were inoculated in the substrate, periodic watering was done until reaching the substrate capacity, samples were taken at different depths (20 cm, 40 cm and 60 cm) and the phytopathogens in said samples were counted in order to verify the permanence and presence of phytopathogens in the soil.

A first application of the method of disinfection with ozone was carried out. In doing so, the ozonation apparatus was inserted into the irrigation system and the parameters of said apparatus were adjusted to achieve ozonated water with a minimum of 2 ppm of dissolved ozone. Subsequently, the soil was left resting for 30 minutes and the tomato plants, *Lycopersicum esculentum,* were then transplanted. Then, a second application of the method for disinfecting with ozone was carried out in the same aforementioned conditions and, after allowing the treated soil to rest for 30 minutes, the microorganism formula (1) was inoculated.

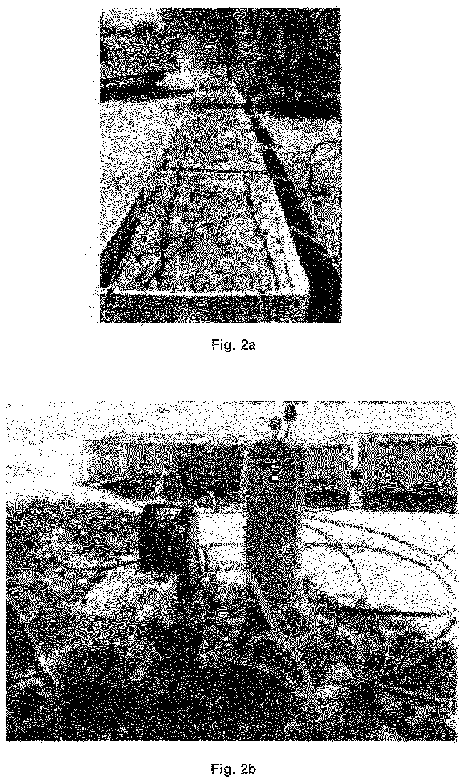

Figure 2a shows the placement of the containers in the field, while figure 2b shows the assembly made to insert the ozonation apparatus used into the irrigation system.

To analyze the effect of the treatment on the disinfection of the soil, samples were taken at different depths (20 cm, 40 cm and 60 cm) and on different dates, and the microbial load in each of the samples was analyzed.

As was previously mentioned, once the first disinfection was completed, tomato plant seedlings were transplanted into the pots in order to evaluate the "residual effect" of the treatment. Subsequently, a study was carried out on the vegetative development of the plants.

### 1.2 Treatments

The treatments, applications and samples are referred to in the following table:

**Table 1: Treatments**

| Code | Description | 1^{st} Application | Sample 1.1 | Sample 1.2 | |
|---|---|---|---|---|---|
| T0 | Control | | 12 Sept. | 16 Sept. | |
| T1 | Ozone | 15 Sept | 12 Sept. | 16 Sept. | |

| Code | Description | 2^{nd} Application | Sample 2.1 | Sample 2.2 | Sample 2.3 |
|---|---|---|---|---|---|
| T | Control | | 14 Oct. | 17 Oct. | 14 Nov. |
| T1 | Ozone | 16 Oct. | 14 Oct. | 17 Oct. | 14 Nov. |

After the first application of the method of disinfection, on the 19 September 2014, 2 tomato plants were transplanted to each container. The residual effect of the ozone was evaluated.

### 1.3 Experimental size and design

The control treatment corresponds to container number 1. Given that there is only one repetition, 3 subsamples were taken during the sampling.

**Table 2: Diagram of the experimental design**

| Code | Description | Repetitions | Container Code |
|---|---|---|---|
| T0 | Control | 3 | 1,2,3 |
| T1 | Ozone (>2ppm) | 3 | 4,5,6 |

### 1.4 Parameters evaluated

During the testing, the parameters evaluated were:
- Flow rate and ppm of ozone at the outlet.
- Microbial evaluation of the soil (t=0; t=7 days and t=30 days).
- Relation between the depth and the possible fungicide effect.
- Once the tomato plants were established, it was evaluated whether the treatments caused phytotoxicity. The parameters that will be observed in the crops will be the appearance of necrosis and burns on leaves and fruit.
- Vegetative development of the crops.

The effect of the treatments (ozone, control) and the evaluation thereof was determined by the Student-t test in the SPSS statistical analysis package. The test determines if the averages that the experiments show are significantly different with a level of reliability (P>0.05). With the results shown in bar graphs, the result tables show whether or not significant differences existed (different letter) or if there is no evidence of any differences between the treatments (same letter).

### 1.5. Results

### 1.5.1 Flow rate and flow rate and ppm of ozone at the outlet.

The data collected during the first application are shown in the following table:

**Table 3: Ozone readings**

| **Time (minutes)** | **Apparatuses involved** | **Description / Observations** |
|---|---|---|
| **0-120** | Irrigation | Water saturation |
| **15-20** | Ozone apparatus | Verification on 4 occasions of the analysis to determine the grams of ozone per liter of water. |
| | Drip irrigation | 2 ppm. Minimum level for a good disinfection |
| **15** | Reading | 2 ppm |
| **55** | Reading | 2.3 ppm |
| **65** | Reading | 2.89 ppm |
| **115** | Reading | 4.49 ppm at the direct outlet of the pump |
| | | 3.92 ppm at the dropper |

### 1.5.2. Evaluation of the microbial population after Application 1

In this section, the data obtained is described. As was explained in the testing protocol, samples were taken of soil at different depths (20 cm, 40 cm and 60 cm) and quality controls were performed, quantifying the number of pathogenic fungi and bacteria.

### A. Pathogenic Fungi

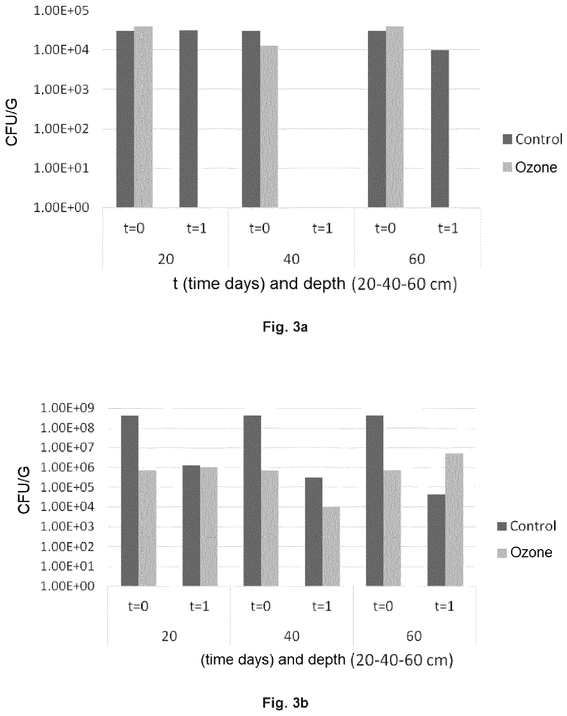

Before the treatments and 24 hours after the application, the survival of the pathogenic fungi was evaluated. After analyzing the data per treatment (see figure 3a), we found that:
- In the treatment control: the microbial load was similar before and after the application at all tested depths, except at 40 cm, where a cleanse was carried out.
- The application of ozone led to a 100% reduction at depths of 20 and 60 cm.

### B. Pathogenic bacteria

At each of the tested depths (20 cm, 40 cm and 60 cm), both treatments reduced the bacterial populations in the soil (see figure 3b). At all of the depths evaluated (except at 60 cm), the populations of pathogenic bacteria were lower than the control, with a reduction lower than 50%.

### 1.5.3. Evaluation of the microbial population after Application 2

### A. Pathogenic Fungi

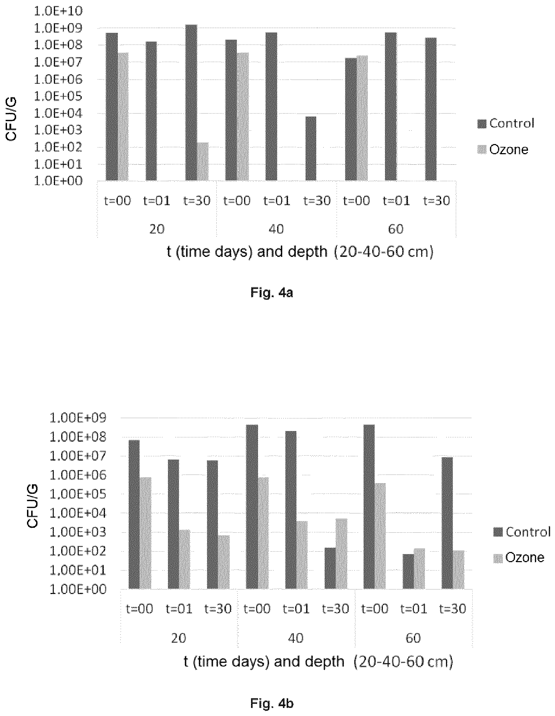

As shown in figure 4a, the application of ozone reduced the pathogenic fungi by 100 % at depths of 40 and 60 cm, maintaining the effectiveness of both products and prolonging the effect for 30 days. At a depth of 20 cm, the ozone treatment reduced the population by 100 %, with traces of fungi appearing one month later, possibly due to soil contamination from environmental factors.

### B. Pathogenic bacteria

The study of the data (see figure 4b) shows the disinfectant power of ozone, although the reduction was not complete. Given the speed bacterial reproduction, it is estimate that after the residual effect of the products disappears completely, populations will reach levels similar to those of the control.

### 1.6. Phytotoxicity in tomato plants

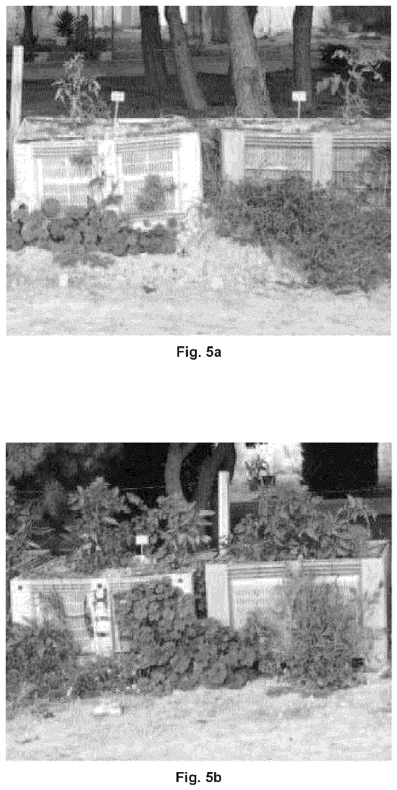

After the first application of the ozone treatment, two tomato plants were transplanted to each one of the containers. The growth of the plants was evaluated during three months, the analysis of this parameter ending on January 2 due to the presence of frost in the area (see figures 5a and 5b).

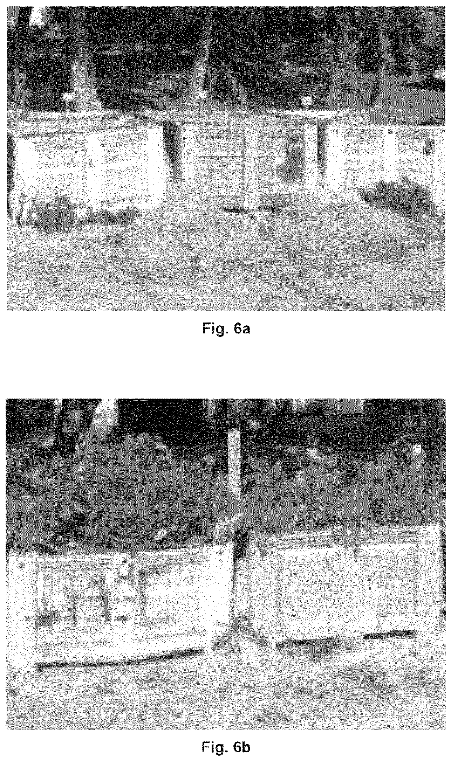

The growth in plants where ozone treatment was applied exhibited a vigorous development in vegetation due to the decrease of pathogenic microorganisms, while in the control plants, development was medium-low. Two weeks after the second application, the control plants died due to an infection (see figure 6a and 6b).

### 1.7. Conclusions

The results obtained show the level of disinfection with ozone was 100% for the phytopathogenic fungi tested. Additionally, pathogenic mesophilic bacterial populations decreased after the application of the disinfectant, with a mortality rate lower than 50% after the first application. During the second application, the 50% reduction was maintained, with the exception of that which was observed at a depth of 60 cm, where reduction reached 60%.

Moreover, in examples treated with ozone, the vegetative development of the tomato plants was vigorous due to the reduction of microorganism populations, whereas the tomato plants grown in the control containers experienced low-medium growth and ended up dying due to a pathogenic infection.

Additionally, after the first application, tomato plants were transplanted in each of the repetitions and we evaluated whether the application of ozone caused phytotoxicity. Three months after the transplant, the plants treated with ozone showed normal growth and vegetative development, whereas the control plants ended up dying as a consequence of an attack by pathogens present in the soil.

### Example 2: Disinfection of nematodes in peppers; variety padrón

The test was done in the month of May, 2015 on a Padrón Pepper farm that was highly affected by nematodes and the farmer sought to uproot the crop, since the cultivated field was considered lost. On a surface of 500 m² of a greenhouse, with a water consumption of 3000 l/h, disinfection with ozone was performed with a dose of 6 ppm, reviewing through the REDOX readings that the drip emitters furthest away had a reading of 1000 mV, starting with a value in the irrigation water without ozone of 185 mV.

Once treatment was finished, inoculation of the microorganism formula (1) was carried out (see example 1). Seven days after the treatment, samples were taken of the soil to see the infestation level of nematodes, and the results showed a 90% reduction in the population.

Specifically, after the disinfection through ozonated irrigation in the Padrón pepper crop affected by the nematodes (Meloidogyne) in full production, the following results were obtained:
- Analysis prior to disinfection: *Meloidogyne sp.* 88 juveniles/100 cc of soil
- Analysis after disinfection: *Meloidogyne sp.* 8 juveniles/1 cc of soil.

The part of the farm that was treated recovered from the damage and continued to produce up to the date of its expected plucking.

### Example 3: Disinfection of nematodes in citrus crops (lemon trees). The effect of ozonation and inoculation with beneficial microorganisms in the control of phytopathogenic nematodes in soil

The present testing in citruses was done, during the months of May and September of 2015, on a plot of land with a high rate of nematode infection. The effect of two ozone applications and one final application of a mix of microorganisms (microorganism formula (2)) was evaluated. The microorganism formula (2) was made up of: *Bacillus* (1.5x10⁸ CFU), *Azotobacter* (1.5x1 0⁸ CFU) and *Pseudomonas* (1.5x1 0⁸ CFU).

The parameters studied were: the evolution of the phytopathogenic nematode population, the evolution of the fungi population and, after the application of the microorganism formula (2), a recount was taken of the number of bacteria in the soil. The results showed that the application of ozone together with the beneficial microorganisms significantly reduced the population of the phytopathogenic nematodes in the soil.

The objective of this test was to evaluate the action of ozone and beneficial microorganisms in controlling phytopathogenic nematodes in citruses.

### 3.1. Material and methods

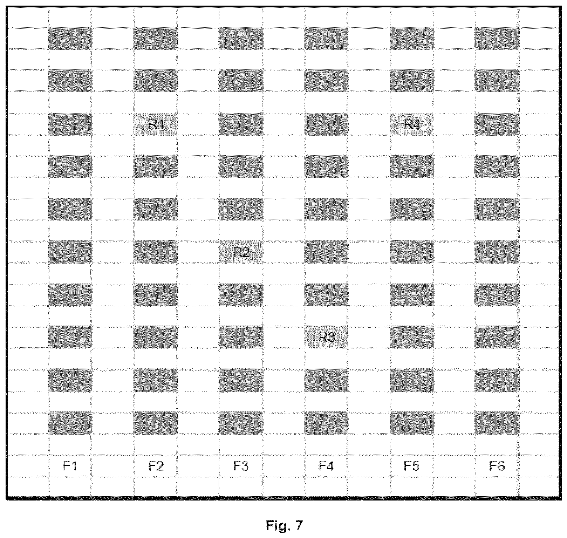

On a plot of land with a high rate of infection of nematodes of the Pratylenchus sp. genus, 4 repetitions were selected. Figure 7 shows the sampling points collected.

The date of the application of the products was:
- Ozone: a concentration of 5-6 ppm was applied. Applications: 21 and 27 May.
- Microorganism formula (2) (Bionema Plus): A single application of a dose of 20 l/ha was administered on 4 June.

**Table 1 Samples**

| Sample | Description of the application | Date |
|---|---|---|
| Sample 1 | Prior to the application | 20 May |
| Sample 2 | After the 1^{st} application of Ozone | 21 May |
| Sample 3 | After the 2^{nd} application of Ozone | 28 May |
| Sample 4 | After the application of Bionema Plus | 23 September |

### 3.2. Conclusions

The results have shown that the application of ozone and the microorganism formula (2) significantly reduced the population of phytopathogenic nematodes, with a reduction of 50 nem / g to 0.2 nem /g, a population that is practically nonexistent.

### Example 4: Evolution of nematodes in soil after treatment with ozone and after the inoculation of microorganisms

This test was done in T.M. Benifaió (Valencia), in clay loam soil. Treatments were done at the end stage of vegetable crops, before planting new vegetables, such as cucumbers, tomatoes and peppers.

The soil had a high content of nematodes that were seriously affecting the crops.

The method for the disinfection of soil described in this patent application was applied, wherein the treatment with ozonated irrigation water (5.5 ppm of ozone) was done for 2 hours, and inoculation took place through the application of the colonizing microorganism formula (1) (see example 1) 24 hours after the disinfection with ozone.

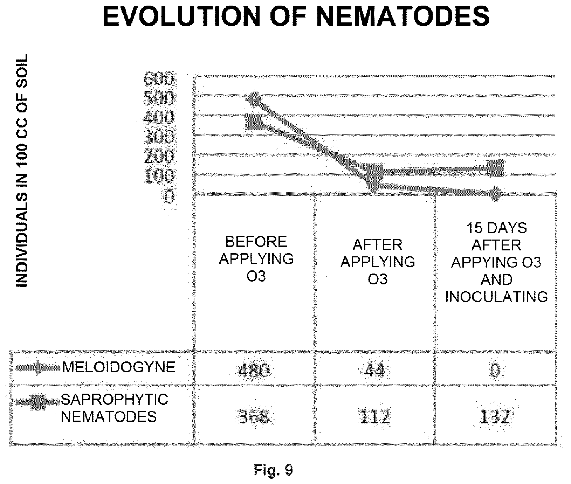

As can be seen in figure 9, before applying the treatment, the soil sample extracted had 480 juveniles / 100 cc of soil. After the ozone treatment, the presence of juveniles was reduced to 44/100 cc of soil, and 15 days after the inoculation with the microorganism formula (1), the sample analyzed had a rate of 1 juvenile/100 cc of soil.

These results show a considerable reduction in the percentage of nematodes. Likewise, an increase in the amount of saprophytes to 20 units/100 cc of soil is also observed.

The different tests done show that both in bare soil and soil with crops, the best results are obtained by combining a periodic treatment with ozone (minimum 2 ppm) in irrigation water, followed by the inoculation with beneficial microorganisms.

## Claims

1. A method for disinfecting soil or other substrates for agricultural crop, **characterized in that** it comprises:
- obtaining a soil or another substrate for agricultural crop in its field capacity;
- treating the soil or substrate in its field capacity from the previous stage with ozonated water containing a minimum of 2 ppm of ozone, wherein the ozonated water is prepared in situ with an ozone-producing apparatus connected to the supply of water with a pH between 5.0 and 8.5;
- allowing a time period to pass from 30 min to 24 hours after treatment with ozone; and
- inoculating the disinfected soil or agricultural substrate with at least one species of beneficial microorganisms.

2. The method for disinfecting according to claim 1, wherein the content of dissolved ozone in ozonated water is between 5 and 6 ppm.

3. The method for disinfecting according to any one of claim 1 to 2, wherein the treatment with ozonated water takes place for a period of time ranging from 1 h 30 min to 2 hours.

4. The method for disinfecting according to any one of claims 1 to 3, wherein the beneficial microorganism is selected from the group consisting of *Trichoderma, Bacillus, Azotobacter, Pseudomonas* and any combination of the aforementioned microorganisms.

5. The method for disinfecting according to any one of claims 1 to 4, wherein water is applied through localized irrigation.

6. The method for disinfecting according to any one of claims 1 to 5, wherein the soil or substrate does not have crops growing, and the method comprises the following stages:
- preparing the soil or substrate for the planting;
- obtaining the soil or substrate in its field capacity;
- treating the soil or substrate in its field capacity from the previous stage with ozonated water containing a minimum of 2 ppm of ozone, wherein the ozonated water is prepared in situ with an ozone-producing apparatus connected to the supply of water with a pH between 5.0 and 8.5;
- allowing a time period to pass from 30 min to 24 hours after treatment with ozone;
- inoculating the disinfected soil or agricultural substrate with at least one species of beneficial microorganisms; and
- planting the crops to be grown.

7. The method for disinfecting according to any one of claims 1 to 5, wherein the soil or substrate has crops growing, and the method comprises the following stages:
- obtaining the soil or substrate in its field capacity;
- treating the soil or substrate from the previous stage with ozonated water containing a minimum of 2 ppm of ozone, wherein the ozonated water is prepared in situ with an ozone-producing apparatus connected to the supply of water with a pH between 5.0 and 8.5;
- allowing a time period to pass from 30 min to 24 hours after treatment with ozone; and
- inoculating the disinfected soil or agricultural substrate with at least one species of beneficial microorganisms.

## Patentansprüche

1. Verfahren zum Desinfizieren von Boden oder anderen Substraten für eine landwirtschaftliche Kultur, **dadurch gekennzeichnet, dass** es umfasst:
- Erhalten eines Bodens oder anderen Substrats für eine landwirtschaftliche Kultur in seiner Feldkapazität;
- Behandeln des Bodens oder Substrats in seiner Feldkapazität aus der vorangehenden Stufe mit ozonisiertem Wasser, das mindestens 2 ppm Ozon enthält, wobei das ozonisierte Wasser in situ mit einem ozonerzeugenden Gerät hergestellt wird, das mit der Wasserversorgung mit einem pH zwischen 5,0 und 8,5 verbunden ist;
- Verstreichenlassen eines Zeitraums von 30 min bis 24 Stunden nach der Behandlung mit Ozon; und
- Beimpfen des desinfizierten Bodens oder landwirtschaftlichen Substrats mit wenigstens einer Art von nützlichen Mikroorganismen.

2. Verfahren zum Desinfizieren gemäß Anspruch 1, wobei der Gehalt an gelöstem Ozon in ozonisiertem Wasser zwischen 5 und 6 ppm beträgt.

3. Verfahren zum Desinfizieren gemäß einem der Ansprüche 1 bis 2, wobei die Behandlung mit ozonisiertem Wasser über einen Zeitraum im Bereich von 1 h 30 min bis 2 Stunden stattfindet.

4. Verfahren zum Desinfizieren gemäß einem der Ansprüche 1 bis 3, wobei der nützliche Mikroorganismus ausgewählt ist aus der Gruppe bestehend aus *Trichoderma, Bacillus, Azotobacter, Pseudomonas* und einer beliebigen Kombination der vorstehend erwähnten Mikroorganismen.

5. Verfahren zum Desinfizieren gemäß einem der Ansprüche 1 bis 4, wobei Wasser durch örtlich begrenzte Bewässerung angewandt wird.

6. Verfahren zum Desinfizieren gemäß einem der Ansprüche 1 bis 5, wobei der Boden oder das Substrat keine wachsenden Kulturen aufweist, und das Verfahren die folgenden Stufen umfasst:
- Vorbereiten des Bodens oder Substrats für die Bepflanzung;
- Erhalten des Bodens oder Substrats in seiner Feldkapazität;
- Behandeln des Bodens oder Substrats in seiner Feldkapazität aus der vorangehenden Stufe mit ozonisiertem Wasser, das mindestens 2 ppm Ozon enthält, wobei das ozonisierte Wasser in situ mit einem ozonerzeugenden Gerät hergestellt wird, das mit der Wasserversorgung mit einem pH zwischen 5,0 und 8,5 verbunden ist;
- Verstreichenlassen eines Zeitraums von 30 min bis 24 Stunden nach der Behandlung mit Ozon;
- Beimpfen des desinfizierten Bodens oder landwirtschaftlichen Substrats mit wenigstens einer Art von nützlichen Mikroorganismen; und
- Pflanzen der Kulturen, die angebaut werden sollen.

7. Verfahren zum Desinfizieren gemäß einem der Ansprüche 1 bis 5, wobei der Boden oder das Substrat wachsende Kulturen aufweist, und das Verfahren die folgenden Stufen umfasst:
- Erhalten des Bodens oder Substrats in seiner Feldkapazität;
- Behandeln des Bodens oder Substrats aus der vorangehenden Stufe mit ozonisiertem Wasser, das mindestens 2 ppm Ozon enthält, wobei das ozonisierte Wasser in situ mit einem ozonerzeugenden Gerät hergestellt wird, das mit der Wasserversorgung mit einem pH zwischen 5,0 und 8,5 verbunden ist;
- Verstreichenlassen eines Zeitraums von 30 min bis 24 Stunden nach der Behandlung mit Ozon; und
- Beimpfen des desinfizierten Bodens oder landwirtschaftlichen Substrats mit wenigstens einer Art von nützlichen Mikroorganismen.

## Revendications

1. Procédé de désinfection du sol et d'autres substrats pour une culture agricole, **caractérisé en ce qu'**il comprend :
- l'obtention d'un sol ou autre substrat pour une culture agricole dans sa capacité de champ ;
- le traitement du sol ou substrat dans sa capacité de champ à partir de l'étape précédente avec de l'eau ozonée contenant un minimum de 2 ppm d'ozone, dans lequel l'eau ozonée est préparée in situ avec un appareil de production d'ozone connecté à l'alimentation en eau avec un pH de 5,0 à 8,5 ;
- le laisser une durée de 30 min à 24 heures s'écouler après le traitement avec l'ozone ; et
- l'inoculation du sol ou substrat agricole désinfecté avec au moins une espèce de microorganismes bénéfiques.

2. Procédé de désinfection selon la revendication 1, dans lequel la teneur en ozone dissoute dans l'eau ozonée est de 5 à 6 ppm.

3. Procédé de désinfection selon l'une quelconque de la revendication 1 à 2, dans lequel le traitement avec de l'eau ozonée a lieu sur une durée de 1 h 30 min à 2 heures.

4. Procédé de désinfection selon l'une quelconque des revendications 1 à 3, dans lequel le microorganisme bénéfique est choisi dans le groupe consistant en *Trichoderma, Bacillus, Azotobacter, Pseudomonas* et une combinaison quelconque des microorganismes cités précédemment.

5. Procédé de désinfection selon l'une quelconque des revendications 1 à 4, dans lequel de l'eau est appliquée par irrigation localisée.

6. Procédé de désinfection selon l'une quelconque des revendications 1 à 5, dans lequel le sol ou substrat ne présente pas de cultures en croissance, et le procédé comprend les étapes suivantes de :
- préparation du sol ou substrat pour la plantation ;
- obtention du sol ou substrat dans sa capacité de champ ;
- traitement du sol ou substrat dans sa capacité de champ à partir de l'étape précédente avec de l'eau ozonée contenant un minimum de 2 ppm d'ozone, dans lequel l'eau ozonée est préparée in situ avec un appareil de production d'ozone connecté à l'alimentation en eau avec un pH de 5,0 à 8,5 ;
- laisser une durée de 30 min à 24 heures s'écouler après traitement avec l'ozone ;
- inoculation du sol ou substrat agricole désinfecté avec au moins une espèce de microorganismes bénéfiques ; et
- plantation des récoltes à faire croître.

7. Procédé de désinfection selon l'une quelconque des revendications 1 à 5, dans lequel le sol ou substrat présente des récoltes en croissance, et le procédé comprend les étapes suivantes de :
- obtention du sol ou substrat dans sa capacité de champ ;
- traitement du sol ou substrat à partir de l'étape précédente avec de l'eau ozonée contenant un minimum de 2 ppm d'ozone, dans lequel l'eau ozonée est préparée in situ avec un appareil de production d'ozone connecté à l'alimentation en eau avec un pH de 5,0 à 8,5 ;
- laisser une durée de 30 min à 24 heures s'écouler après traitement avec de l'ozone ; et
- inoculation du sol ou substrat agricole désinfecté avec au moins une espèce de microorganismes bénéfiques.
